# EUROPEAN PATENT APPLICATION

(11) **EP 4 667 428 A1**
(43) Date of publication of application: **24.12.2025**
(21) Application number: 23922965.1
(22) Date of filing: 26.12.2023
(51) Int. Cl.: C03B 37/018, C03B 37/012, C03B 37/027

(54) **PRODUCTION DEVICE FOR GLASS ROD FOR OPTICAL FIBER BASE MATERIAL, PRODUCTION METHOD FOR GLASS ROD FOR OPTICAL FIBER BASE MATERIAL, AND PRODUCTION METHOD FOR OPTICAL FIBER**

(30) Priority: 15.02.2023 JP 2023021407
(71) Applicant: Fujikura Ltd., Tokyo 135-8512 (JP)
(72) Inventor: LI, Tingting, Sakura-shi, Chiba 285-8550 (JP); KITAMURA, Takayuki, Sakura-shi, Chiba 285-8550 (JP)
(74) Representative: Hoffmann Eitle
(86) International application number: PCT/JP2023/046728
(87) International publication number: WO 2024/171634

(57) **Abstract**

An apparatus (30) for producing a glass rod for an optical fiber preform includes: a first lathe grip part (31) capable of gripping a silica glass tube (20) at a position partway therealong; a first heating part (33), on one side relative to the first lathe grip part (31), capable of heating the silica glass tube (20) such that an alkali compound (40) reaches the melting point or higher; a carrier gas introduction part (35) capable of introducing a carrier gas (CG) into a through hole (20H) of the silica glass tube (20) such that the alkali compound vaporized is allowed to flow through the through hole (20H); and a second heating part (34) capable of heating the silica glass tube (20) while moving along the lengthwise direction of the silica glass tube (20) on the other side of the silica glass tube (20) such that the alkali compound is heated and the silica glass tube (20) is doped with an alkali metal or an alkali earth metal.

## Description

### Technical Field

The present invention relates to an apparatus for producing a glass rod for an optical fiber preform, a method for producing a glass rod for an optical fiber preform, and a method for producing an optical fiber.

### Background Art

In an optical fiber communication system, it is necessary to increase the optical signal/noise ratio in order to increase the optical transmission distance and the optical transmission speed. Thus, reduction of transmission loss of an optical fiber is required. At present, a method for producing an optical fiber is highly sophisticated, and it is considered that transmission loss due to impurities contained in an optical fiber is almost reduced to a limit. The main cause of remaining transmission loss is scattering loss due to fluctuations in the structure and composition of glass constituting an optical fiber. This is unavoidable because an optical fiber is made of glass.

As an optical fiber in which scattering loss associated with fluctuations in the structure and composition of glass as described above can be reduced, there is known an optical fiber in which the core is made of silica glass doped with a small amount of alkali metal oxide or alkaline earth metal oxide, and the cladding is made of silica glass doped with fluorine. Hereinafter, alkali metal oxides and alkaline earth metal oxides may be referred to as alkali oxides.

By doping silica glass with an alkali oxide, the softening point of the silica glass is greatly reduced. That is, when comparison is made at the same temperature with silica glass doped with no alkali oxide, silica glass doped with an alkali oxide has a low viscosity, so that the structural relaxation is readily promoted. For this reason, when an optical fiber preform is prepared such that silica glass doped with an alkali oxide becomes the core and an optical fiber is produced by drawing the optical fiber preform, structural fluctuation of silica glass constituting the core is quickly reduced. As a result, it is possible to produce an optical fiber in which transmission loss can be reduced.

Patent Literature 1 below discloses a method for producing an optical fiber preform by doping silica glass with an alkali oxide according to a method to which an improved chemical vapor deposition (MCVD) method is applied. In the method described in Patent Literature 1 below, first, dummy glass tubes are welded to both ends of a glass tube section made of pure synthetic silica glass to form a composite glass tube. Both ends of the composite glass tube are attached to a glass forming lathe used in the MCVD method, and a gas containing oxygen is allowed to flow as a carrier gas in a hollow portion of the composite glass tube. In addition, a compound of an alkali metal or an alkaline earth metal, which is a raw material of the alkali oxide, is disposed in a solid state in the interior of the composite glass tube on the upstream side in the carrier gas flowing direction. Hereinafter, compounds of alkali metals and compounds of alkaline earth metals may be referred to as alkali compounds. Next, the alkali compound is vaporized according to the vapor pressure by heating to a temperature equal to or higher than the melting point using a first oxyhydrogen burner, and the vaporized alkali compound is micronized by cooling with the carrier gas and simultaneously allowed to flow toward the other side of the composite glass tube. Then, the alkali compound is heated at a temperature at which the alkali compound becomes an alkali oxide by thermal oxidation reaction (for example, the outer surface temperature of the glass tube is about 1300°C to about 2250°C) using a second oxyhydrogen burner relatively moving with respect to the glass tube section from the upstream side to the downstream side of the carrier gas, and the alkali oxide is deposited on the inner peripheral surface of the glass tube section and further allowed to diffuse into the silica glass constituting the glass tube section. The glass tube section doped with the alkali oxide thus prepared is further heated to shrink and collapse, thereby obtaining a silica glass rod doped with the alkali oxide. The glass rod doped with the alkali oxide in this manner can be the core of an optical fiber. By forming a layer to be a cladding around such a glass rod, an optical fiber preform can be formed.

[Patent Literature 1] JP 5656469 B2

### Summary of Invention

In recent years, there is a demand for lengthening an optical fiber drawn from one optical fiber preform. For this purpose, a glass rod for an optical fiber preform produced in Patent Literature 1 may be lengthened. However, in the method to which the MCVD method of Patent Literature 1 is applied, when the glass tube section to be the glass rod for an optical fiber preform is lengthened, the composite glass tube becomes long, and deflection of the composite glass tube is likely to occur because both ends of the composite glass tube are attached to a lathe. Deflection of the composite glass tube causes whirling or the like during rotation of the composite glass tube about the axis, and distortion, thickness deviation or the like of the glass tube section is likely to occur. Thus, in the method described in Patent Literature 1, it tends to be difficult to lengthen the glass rod for an optical fiber preform. The same applies to a case where the composite glass tube is formed of one silica glass tube having no welded portion.

It is therefore an object of the present invention to provide, using a method to which an MCVD method is applied, an apparatus for producing a glass rod for an optical fiber preform which can increase the length of the glass rod to be produced for an optical fiber preform, a method for producing a glass rod for an optical fiber preform, and a method for producing an optical fiber.

In order to solve the above problems, Aspect 1 of the present invention is an apparatus for producing a glass rod for an optical fiber preform that includes a first lathe grip part capable of gripping a silica glass tube at a position separated by a predetermined distance from the end of one side of the silica glass tube; a second lathe grip part capable of gripping the silica glass tube on the other side of the silica glass tube relative to the first lathe grip part; a first heating unit provided to the one side relative to the first lathe grip part and capable of heating the silica glass tube such that an alkali metal compound or an alkaline earth metal compound disposed in a through hole of the silica glass tube reaches the melting point or higher; a carrier gas introduction part capable of introducing a carrier gas into the through hole of the silica glass tube from the one side such that the alkali metal compound or the alkaline earth metal compound vaporized is allowed to flow and the alkali metal compound or the alkaline earth metal compound micronized in the course of flowing is allowed to flow through the through hole of the silica glass tube between the first lathe grip part and the second lathe grip part; and a second heating unit capable of heating the silica glass tube while moving along the longitudinal direction of the silica glass tube such that the fine particles of the alkali metal compound or the alkaline earth metal compound reach the oxidation reaction temperature or higher.

In this apparatus for producing a glass rod for an optical fiber preform, even when a reservoir portion in which an alkali compound is disposed is provided in a silica glass tube, the reservoir portion can be positioned to one side relative to the first lathe grip part. For this reason, even when the length of a silica glass tube to be a glass rod for an optical fiber preform is increased, deflection of the silica glass tube can be suppressed, as compared with the apparatus for producing a glass preform described in Patent Literature 1 in which both ends of a composite glass tube are attached to the lathe and the reservoir portion is located between the both ends. Thus, according to the apparatus for producing a glass rod for an optical fiber preform of the present invention, it is possible to produce a glass rod for an optical fiber preform from which a long optical fiber preform can be formed.

Aspect 2 of the present invention is the apparatus for producing a glass rod for an optical fiber preform of Aspect 1, in which the distance from the position where the first heating unit heats the silica glass tube to the first lathe grip part is longer than the distance from the position closest to the first lathe grip part where the second heating unit heats the glass tube to the first lathe grip part.

As described above, in the apparatus for producing a glass rod for an optical fiber preform of Aspect 2 of the present invention, the portion between the position where the first heating unit heats the silica glass tube and the first lathe grip part, the portion where the first lathe grip part grips the silica glass tube, and the portion between the position closest to the first lathe grip part where the second heating unit heats the glass tube and the first lathe grip part can be cooling portions where the alkali compound forced to flow by the carrier gas is cooled. With the configuration of Aspect 2, in a case where the distance from the position where the first heating unit heats the silica glass tube to the first lathe grip part is constant, the silica glass tube to be doped with the alkali compound can be made longer than that in a case where the distance from the position where the first heating unit heats the silica glass tube to the first lathe grip part is equal to or less than the distance from the position closest to the first lathe grip part where the second heating unit heats the glass tube to the first lathe grip part.

Aspect 3 of the present invention is the apparatus for producing a glass rod for an optical fiber preform of Aspect 1 or 2, in which the first lathe grip part is made of metal.

In this case, the first lathe grip part can efficiently absorb heat from the silica glass tube as compared with a case where the first lathe grip part is made of Teflon (registered trademark) coating or the like. Thus, the alkali compound forced to flow by the carrier gas can be efficiently cooled.

Aspect 4 of the present invention is a method for producing a glass rod for an optical fiber preform that includes: a gripping step of gripping a silica glass tube at a position separated by a predetermined distance from the end of one side of the silica glass tube with a first lathe grip part and gripping the silica glass tube with a second lathe grip part on the other side of the silica glass tube relative to the first lathe grip part; a first heating step of heating the silica glass tube such that an alkali metal compound or an alkaline earth metal compound disposed in a through hole of the silica glass tube on the one side relative to the first lathe grip part reaches the melting point or higher; a flowing step of introducing a carrier gas into the through hole of the silica glass tube from the one side, allowing the alkali metal compound or the alkaline earth metal compound vaporized in the first heating step to flow, and allowing the alkali metal compound or the alkaline earth metal compound micronized in the course of flowing to flow through the through hole of the silica glass tube between the first lathe grip part and the second lathe grip part; and a second heating step of heating the silica glass tube while moving a second heating unit along the longitudinal direction of the silica glass tube such that fine particles of the alkali metal compound or the alkaline earth metal compound reach the oxidation reaction temperature or higher.

In the method for producing a glass rod for an optical fiber preform of the present aspect, in the first heating step, the silica glass tube on the side opposite to the second lathe grip part side relative to the first lathe grip part is heated to heat the alkali compound in the through hole of the silica glass tube. In this way, even when the length of the silica glass tube to be a glass rod for an optical fiber preform is increased, deflection of the silica glass tube can be suppressed, as compared with the method for producing a glass member described in Patent Literature 1 in which an alkali compound is disposed between both ends of a composite glass tube attached to a lathe and is heated. Thus, according to the method for producing a glass rod for an optical fiber preform of the present invention, it is possible to produce a glass rod for an optical fiber preform from which a long optical fiber preform can be formed.

Aspect 5 of the present invention is the method for producing a glass rod for an optical fiber preform of Aspect 4, in which the distance from the position where the silica glass tube is heated in the first heating step to the lathe grip part is longer than the distance from the position closest to the first lathe grip part where the silica glass tube is heated in the second heating step to the lathe grip part.

In this case, similarly to the description of Aspect 2, the portion between the position where the silica glass tube is heated in the first heating step and the first lathe grip part, the portion where the first lathe grip part grips the silica glass tube, and the portion between the position closest to the first lathe grip part where the second heating unit heats the glass tube and the first lathe grip part can be cooling portions where the alkali compound forced to flow by the carrier gas is cooled. Thus, as compared with the case where the distance from the position where the silica glass tube is heated in the first heating step to the lathe grip part is equal to or less than the distance from the position closest to the first lathe grip part where the silica glass tube is heated in the second heating step to the lathe grip part, when the lengths of the cooling portions are the same, the silica glass tube to be doped with the alkali compound can be made longer.

Aspect 6 of the present invention is a method for producing an optical fiber including a drawing step of drawing an optical fiber preform having a glass rod for an optical fiber preform produced by the method for producing a glass rod for an optical fiber preform of Aspect 4 or 5.

According to this method for producing an optical fiber, a long optical fiber can be produced.

As described above, according to the present invention, there are provided, using a method to which an MCVD method is applied, an apparatus for producing a glass rod for an optical fiber preform which can increase the length of the glass rod to be produced for an optical fiber preform, a method for producing a glass rod for an optical fiber preform, and a method for producing an optical fiber.

### Brief Description of Drawings

[FIG. 1] FIG. 1 is a cross-sectional view illustrating an optical fiber according to an embodiment of the present invention.
[FIG. 2] FIG. 2 is a view illustrating a silica glass tube for producing a glass rod for an optical fiber preform according to an embodiment of the present invention.
[FIG. 3] FIG. 3 is a view illustrating a state in which the silica glass tube of FIG. 2 is attached to an apparatus for producing a glass rod for an optical fiber preform.
[FIG. 4] FIG. 4 is a flowchart illustrating steps of the method for producing an optical fiber according to an embodiment of the present invention.
[FIG. 5] FIG. 5 is a view illustrating states of a first heating step and a flowing step.
[FIG. 6] FIG. 6 is a view illustrating a state of a second heating step.
[FIG. 7] FIG. 7 is a view illustrating a state of a collapsing step.
[FIG. 8] FIG. 8 is a view illustrating a glass rod for an optical fiber preform obtained through the collapsing step.
[FIG. 9] FIG. 9 is a cross-sectional view illustrating an optical fiber preform.
[FIG. 10] FIG. 10 is a view illustrating a state of a drawing step.

### Description of Embodiments

Hereinafter, preferred embodiments of an apparatus for producing a glass rod for an optical fiber preform, a method for producing a glass rod for an optical fiber preform, and a method for producing an optical fiber according to the present invention will be described in detail with reference to the drawings.

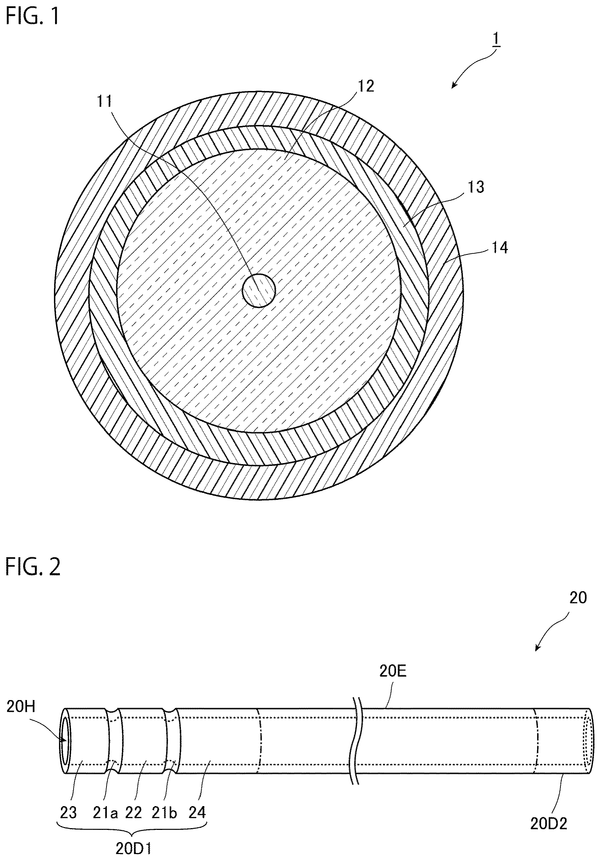

FIG. 1 is a cross-sectional view illustrating an optical fiber according to an embodiment of the present invention. As illustrated in FIG. 1, an optical fiber 1 of the present embodiment includes a core 11, a cladding 12 that surrounds the outer peripheral surface of the core 11 without a gap, an inner protective layer 13 that covers the outer peripheral surface of the cladding 12, and an outer protective layer 14 that covers the outer peripheral surface of the inner protective layer 13. The refractive index of the core 11 is higher than the refractive index of the cladding 12. The core 11 is made of silica glass doped with at least an alkali oxide such as an alkali metal oxide or an alkaline earth metal oxide. The cladding 12 of the present embodiment is made of, for example, silica glass doped with fluorine.

Next, production of a glass rod for an optical fiber preform used for an optical fiber preform to be the optical fiber 1 will be described. This glass rod for an optical fiber finally becomes a core of the optical fiber.

FIG. 2 is a view illustrating a silica glass tube for producing a glass rod for an optical fiber preform of the present embodiment. As illustrated in FIG. 2, the silica glass tube 20 of the present embodiment includes an effective section 20E, a first dummy section 20D1, and a second dummy section 20D2. In the present embodiment, the first dummy section 20D1 is welded to the end of one side of the effective section 20E, and the second dummy section 20D2 is welded to the end on the other side of the effective section 20E. In the figure, the boundary between the effective section 20E and the first dummy section 20D1 and the boundary between the effective section 20E and the second dummy section 20D2 each are indicated by a one-dot chain line.

As the effective section 20E, for example, a commercially available synthetic silica glass tube for an optical fiber can be used. The effective section 20E is a portion to be doped with an alkali oxide as a dopant as described later. Thus, the effective section 20E may be a silica glass tube made of pure silica glass to which no dopant is added, or may be a silica glass tube to which a dopant other than an alkali oxide is added. Examples of such a dopant include chlorine, fluorine, and germanium. The effective section 20E may be doped with a plurality of kinds of these dopants, or may be doped with these dopants such that concentration distribution occurs in the thickness direction. However, as described later, since the effective section 20E is to be the core 11 of the optical fiber 1, the concentration of the dopant added to the effective section 20E is preferably low from the viewpoint that transmission loss of light is reduced. The size of the effective section 20E is not particularly limited, and is, for example, 32 mm in outer diameter and 2.5 mm in wall thickness.

The first dummy section 20D1 and the second dummy section 20D2 are made of silica glass tubes having substantially the same outer diameter and thickness as those of the effective section 20E. As long as the first dummy section 20D1 and the second dummy section 20D2 are tubes made of silica glass, a dopant may or may not be added to them. Note that the silica glass tube 20 need not be one obtained by welding the first dummy section 20D1 and the second dummy section 20D2 to the effective section 20E, and the first dummy section 20D1, the effective section 20E, and the second dummy section 20D2 may made of one silica glass tube. The first dummy section 20D1 of the present embodiment is provided with a pair of reduced diameter portions 21a and 21b. The portion between the reduced diameter portions 21a and 21b in the first dummy section 20D1 becomes a reservoir portion 22 in which an alkali compound such as an alkali metal compound or an alkaline earth metal compound can be disposed on the inner peripheral surface. The side of the reduced diameter portion 21a opposite to the reservoir portion 22 side is a connecting portion 23. The connecting portion 23 includes an end of the silica glass tube 20. The portion between the reduced diameter portion 21b of the first dummy section 20D1 and the effective section 20E is a cooling portion 24, and as described later, the alkali compound flowing through a through hole 20H of the silica glass tube 20 is cooled in the cooling portion 24.

Next, an apparatus for producing the optical fiber 1 will be described.

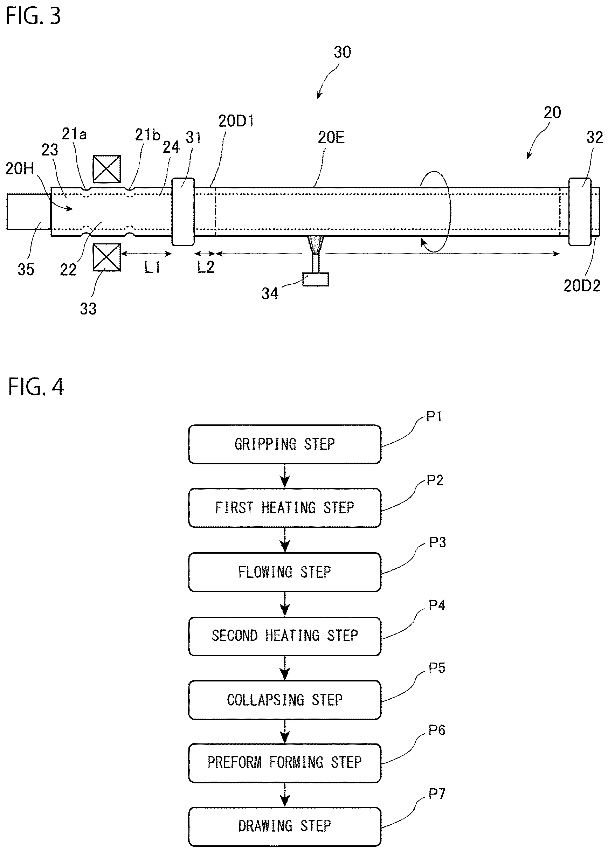

FIG. 3 is a view illustrating a state in which the silica glass tube 20 of FIG. 2 is attached to an apparatus for producing a glass rod for an optical fiber preform. As illustrated in FIG. 3, an apparatus 30 for producing a glass rod for an optical fiber preform of the present embodiment includes a first lathe grip part 31, a second lathe grip part 32, a first heating unit 33, a second heating unit 34, and a carrier gas introduction part 35 as main components.

The first lathe grip part 31 and the second lathe grip part 32 are provided at a predetermined interval from each other, and are configured to be able to grip the silica glass tube 20. The first lathe grip part 31 and the second lathe grip part 32 are made of metal, have claws provided at three places at equal intervals in the circumferential direction of the silica glass tube 20, and grip the outer peripheral surface of the silica glass tube 20 by the claws. In addition, the first lathe grip part 31 can grip the silica glass tube 20 at a position separated by a predetermined distance from the end of one side of the silica glass tube 20, and the second lathe grip part 32 can grip the silica glass tube 20 on the other side relative to the first lathe grip part 31. Details of the position where the first lathe grip part 31 grips the silica glass tube 20 will be described later. In addition, the first lathe grip part 31 and the second lathe grip part 32 are mechanically connected to a drive unit (not illustrated), and are configured to be rotatable around the central axis of the silica glass tube 20 together with the silica glass tube 20 in a state of griping the silica glass tube 20. In the present embodiment, the second lathe grip part 32 can move along the longitudinal direction of the silica glass tube 20 such that the silica glass tube 20 can be attached to the apparatus 30 for producing a glass rod for an optical fiber preform.

The first heating unit 33 is provided to the side, which is one side relative to the first lathe grip part 31, opposite to the second lathe grip part 32 side. In the example of FIG. 3, the first heating unit 33 includes an electric furnace and can heat the silica glass tube 20. As described later, the first heating unit 33 has a configuration capable of heating at least the reservoir portion 22 of the silica glass tube 20 such that the alkali compound in the silica glass tube 20 reaches the melting point or higher, and for example, the first heating unit 33 can heat the silica glass tube 20 to, for example, about 780°C. The first heating unit 33 may be, for example, an oxyhydrogen burner or a plasma heater, other than the electric furnace.

The second heating unit 34 is provided between the first lathe grip part 31 and the second lathe grip part 32, which is the other side relative to the first lathe grip part 31. In the example of FIG. 3, the second heating unit 34 includes an oxyhydrogen burner, and is configured to be able to heat the silica glass tube 20 while moving along the longitudinal direction of the silica glass tube 20. The second heating unit 34 is mechanically connected to a drive unit (not illustrated), and can move so as to be able to heat at least the effective section 20E. In addition, as described later, the second heating unit 34 has a configuration capable of heating the silica glass tube 20 to such an extent that the alkali compound in the silica glass tube 20 reacts with oxygen in the carrier gas (thermal oxidation reaction) to become an alkali oxide and the silica glass tube 20 is doped with an alkali metal or an alkaline earth metal, and for example, the second heating unit 34 can heat the outer surface of the silica glass tube 20 to about 1300°C to about 2250°C. The second heating unit 34 may be an electric furnace or a plasma heater, other than the oxyhydrogen burner.

The carrier gas introduction part 35 is connected to a carrier gas supply source (not illustrated) via a pipe, and is connected to the connecting portion 23 of the silica glass tube 20. The carrier gas introduction part 35 has a configuration capable of introducing the carrier gas into the through hole 20H of the silica glass tube 20 from one side such that the alkali compound vaporized at the reservoir portion 22 of the silica glass tube 20 is allowed to flow and the alkali compound micronized in the course of flowing is allowed to flow through the inner hole of the effective section 20E. The vaporized alkali compound is cooled at the cooling portion 24, thereby being micronized. Even when the silica glass tube 20 rotates about the central axis, the carrier gas introduction part 35 does not rotate and can introduce the carrier gas into the through hole 20H while preventing external gases from flowing into the through hole 20H. Details of the carrier gas will be described later.

Next, a method for producing an optical fiber according to the present embodiment will be described.

FIG. 4 is a flowchart illustrating steps of the method for producing an optical fiber according to the embodiment of the present invention. As illustrated in FIG. 4, the method for producing an optical fiber of the present embodiment includes a gripping step P1, a first heating step P2, a flowing step P3, a second heating step P4, a collapsing step P5, a preform forming step P6, and a drawing step P7.

### <Gripping Step P1>

This step is a step of gripping the silica glass tube 20 with the first lathe grip part 31 and the second lathe grip part 32. In this step, the first lathe grip part 31 grips the silica glass tube 20 at a position separated by a predetermined distance from the end of one side of the silica glass tube 20. Specifically, the silica glass tube 20 is put through the first lathe grip part 31 such that the first lathe grip part 31 is located at the cooling portion 24 in the first dummy section 20D1 of the silica glass tube 20 and the reservoir portion 22 is at the position of the first heating unit 33, and the silica glass tube 20 is gripped by the claws of the first lathe grip part 31. At this time, the second lathe grip part 32 is sufficiently separated from the first lathe grip part 31 such that the silica glass tube 20 does not hit the second lathe grip part 32. When the first heating unit 33 is configured to be movable in the longitudinal direction of the silica glass tube 20, the first heating unit 33 can be moved such that the first heating unit 33 is located at the reservoir portion 22 in a state where the first lathe grip part 31 grips the silica glass tube 20, which is preferable. Next, the second dummy section 20D2 of the silica glass tube 20 is gripped with the second lathe grip part 32. In this way, the silica glass tube 20 is attached to the apparatus 30 for producing a glass rod for an optical fiber preform.

Note that the distance L1 from the position where the first heating unit 33 heats the silica glass tube 20 to the first lathe grip part 31 is preferably longer than the distance L2 from the position closest to the first lathe grip part 31 where the second heating unit 34 heats the silica glass tube 20 to the first lathe grip part 31. In this case, when the lengths of the effective section 20E and the cooling portion 24 are constant, the distance between the first lathe grip part 31 and the second lathe grip part 32 can be reduced as compared with the case where the first lathe grip part 31 grips the silica glass tube 20 such that the distance L1 is equal to or less than the distance L2, and thus deflection of the silica glass tube 20 can be further suppressed.

### <First Heating Step P2>

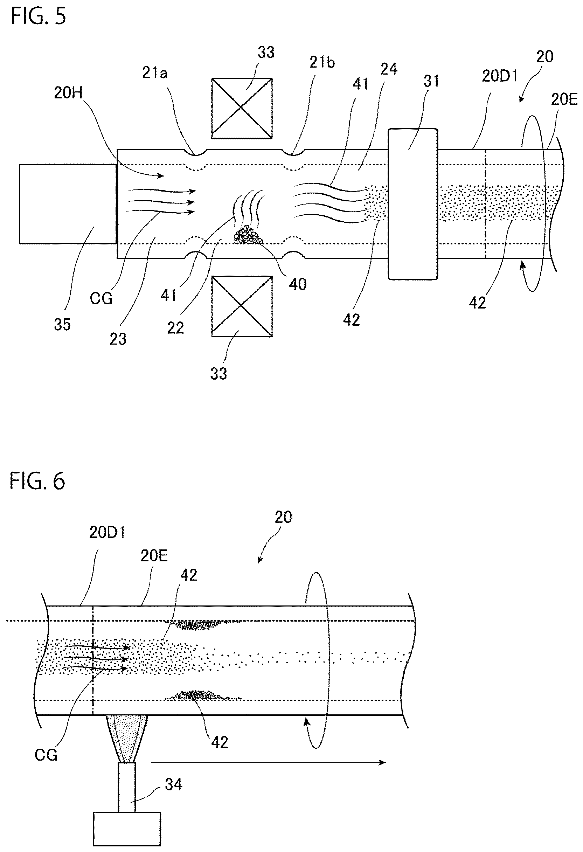

FIG. 5 is a view illustrating states of the present step and the flowing step P3. This step is a step of heating the silica glass tube 20 such that an alkali metal compound or an alkaline earth metal compound disposed in the through hole 20H of the silica glass tube 20 on one side relative to the first lathe grip part 31 reaches the melting point or higher.

Prior to this step, an alkali compound 40 which is solid at room temperature is placed in the through hole 20H of the reservoir portion 22. In the present embodiment, potassium chloride (KCl) is used as the alkali compound 40. When potassium chloride is used as the alkali compound 40, it is easy to adjust the rate of diffusion into the silica glass to an appropriate rate mainly due to the atomic weight of potassium. Note that lithium, sodium, potassium, rubidium, cesium, and the like can be used as the alkali metal, and beryllium, magnesium, calcium, strontium, barium, and the like can be used as the alkaline earth metal. As compounds thereof, halides (chloride, bromide, fluoride, and iodide), sulfides, carbonates, hydrogen carbonates, and the like can be used. The alkali compound 40 is preferably in a particulate form from the viewpoint that the alkali compound 40 is readily melted by heating. The alkali compound 40 is required to be placed on the reservoir portion 22 prior to this step, and the alkali compound 40 may be placed on the reservoir portion 22 before the gripping step P1.

In this step, first, the carrier gas CG is allowed to flow through the through hole 20H from one side of the silica glass tube 20 toward the other side by the carrier gas introduction part 35. As the carrier gas CG, a gas containing dry oxygen of room temperature or heated to, for example, a temperature of about 80°C to about 120°C is used. In addition, in a state where the alkali compound 40 is placed on the reservoir portion 22, the reservoir portion 22 is heated by the first heating unit 33 to dry the alkali compound 40. At this time, the alkali compound 40 is heated at, for example, 150°C for 15 minutes or more.

Next, while the carrier gas CG is allowed to flow from the carrier gas introduction part 35, the silica glass tube 20 is rotated about the central axis by the rotation of the first lathe grip part 31 and the second lathe grip part 32, and the reservoir portion 22 is further heated by the first heating unit 33 to heat the alkali compound 40 to the melting point or higher. At this time, the silica glass tube 20 is heated to, for example, about 780°C. By this heating, the alkali compound 40 is melted, the alkali compound 40 is vaporized according to the vapor pressure, and vapor 41 of the alkali compound is generated.

### <Flowing Step P3>

This step is a step that includes introducing the carrier gas CG into the through hole 20H of the silica glass tube 20 from one side, allowing the alkali metal compound or the alkaline earth metal compound vaporized in the first heating step P2 to flow, and allowing the alkali metal compound or the alkaline earth metal compound micronized in the course of flowing to flow through the through hole 20H of the silica glass tube 20 on the other side relative to the first lathe grip part 31. As described above, in the first heating step P2, the carrier gas CG flows through the through hole 20H of the silica glass tube 20 while the silica glass tube 20 is rotated. Thus, the vapor 41 of the alkali compound 40 is entrained by the carrier gas CG and flows from one side to the other side through the through hole 20H of the silica glass tube 20. When the vapor 41 flows from the reservoir portion 22 to the cooling portion 24, the vapor 41 is cooled, whereby the vapor 41 becomes fine particles 42 of the alkali compound 40. The fine particles 42 flow to the other side relative to the first lathe grip part 31 with the aid of the carrier gas CG. At this time, when the first lathe grip part 31 is made of metal, the first lathe grip part 31 readily absorbs heat from the cooling portion 24 of the silica glass tube 20, which is preferable from the viewpoint that the alkali compound 40 flowing through the through hole 20H is readily cooled.

### <Second Heating Step P4>

This step is a step of heating the silica glass tube 20 while moving the second heating unit 34 along the longitudinal direction of the silica glass tube 20 on the other side relative to the first lathe grip part 31 in the silica glass tube 20 such that the fine particles 42 of the alkali metal compound or the alkaline earth metal compound reach an oxidation reaction temperature or higher. FIG. 6 is a view illustrating a state of this step. As described above, the fine particles 42 of the alkali compound flow through the through hole 20H of the effective section 20E. In this step, as illustrated in FIG. 6, the silica glass tube 20 is heated by the second heating unit 34 while the silica glass tube 20 is rotated by the first lathe grip part 31 and the second lathe grip part 32 and while the second heating unit 34 is moved along the longitudinal direction of the silica glass tube 20 from the upstream side to the downstream side in the flowing direction of the carrier gas CG. At this time, the second heating unit 34 heats the silica glass tube 20 such that the alkali compound reacts with oxygen in the carrier gas CG (thermal oxidation reaction) to become an alkali oxide. For example, the second heating unit 34 heats the silica glass tube 20 such that the outer surface of the silica glass tube 20 reaches a certain temperature of about 1300°C to about 2250°C. The fine particles 42 are heated by the second heating unit 34 moving in this manner. As described above, the carrier gas CG contains oxygen. Thus, the alkali compound is thermally oxidized by oxygen contained in the carrier gas CG to convert the alkali metal compound to an alkali metal oxide, or convert the alkaline earth metal compound to an alkaline earth metal oxide, and the alkali metal oxide or the alkaline earth metal oxide is deposited on the inner wall on the downstream side, relative to the heating unit, of silica glass constituting the silica glass tube 20. The deposited alkali metal oxide or alkaline earth metal oxide is heated again by the moving second heating unit 34 and diffuses into the silica glass constituting the silica glass tube 20. This step can be repeatedly performed by traversing the second heating unit 34 until the concentration of the alkali metal with which the silica glass tube 20 is doped reaches a desired value. In this way, the silica glass tube 20 is doped with the alkali metal oxide or the alkaline earth metal oxide.

### <Collapsing Step P5>

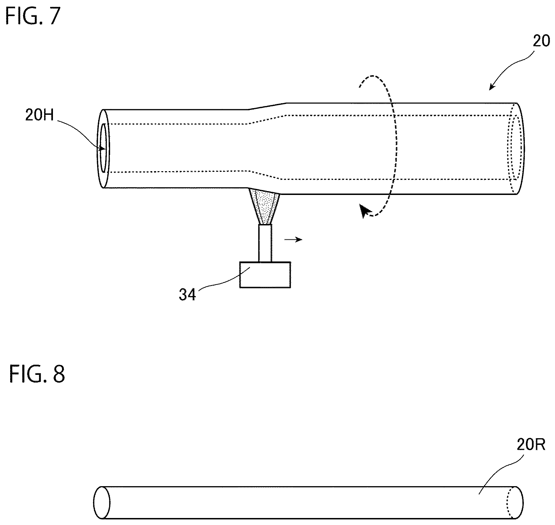

This step is a step in which the silica glass tube 20 doped with the alkali metal or the alkaline earth metal through the second heating step P4 is further heated to reduce the diameter, and then to finally collapse, thereby forming a glass rod 20R for an optical fiber preform. FIG. 7 is a view illustrating a state of this step, and FIG. 8 is a view illustrating a glass rod 20R for an optical fiber preform obtained by this step.

As illustrated in FIG. 7, in this step, the effective section 20E of the silica glass tube 20 is reduced in diameter and then finally collapsed, by heating the silica glass tube 20 from the outer peripheral surface side to about 2000°C or higher with the second heating unit 34 while rotating the silica glass tube 20 around the axial center. The entire effective section 20E of the silica glass tube 20 is gradually reduced in diameter and collapsed, by heating the silica glass tube 20 while relatively moving the second heating unit 34 along the longitudinal direction of the effective section 20E of the silica glass tube 20. At this time, heating may be performed while the pressure in the through hole 20H of the silica glass tube 20 is reduced. In that case, since the process temperature can be lowered, the energy required for the process can be reduced. In this way, there is obtained a cylindrical glass rod 20R for an optical fiber preform made of silica glass doped with an alkali metal oxide or an alkaline earth metal oxide.

In this step, it is preferable to etch the inner peripheral surface side of the effective section 20E of the silica glass tube 20 before collapsing the effective section 20E of the silica glass tube 20. In this case, for example, the second heating unit 34 is traversed while a fluorine-based gas such as a sulfur hexafluoride (SF₆) gas or a hexafluoroethane (C₂F₆) gas is allowed to flow through the through hole 20H. The alkali compound may contain impurities such as transition metals. The alkali oxide diffuses deep into the silica glass tube 20, whereas the impurities tend to remain on the inner peripheral surface side of the silica glass tube 20 because the impurities are less likely to diffuse into the silica glass tube 20 than the alkali oxide. Thus, the impurities can be removed by etching the inner peripheral surface side of the silica glass tube 20.

### <Preform Forming Step P6>

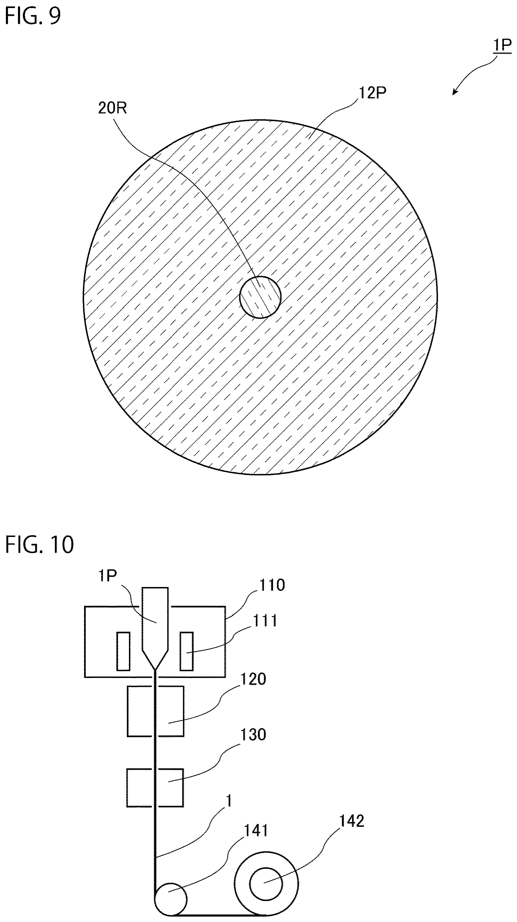

This step is a step of surrounding the outer peripheral surface of the glass rod 20R for an optical fiber preform with a silica glass layer to be a cladding of the optical fiber 1. FIG. 9 is a cross-sectional view illustrating an optical fiber preform obtained in this step. Although the state of this step is not particularly illustrated, for example, a soot of silica glass is attached to the outer peripheral surface of the glass rod 20R for an optical fiber preform by a soot method and sintered in a fluorine compound-containing atmosphere, whereby a silica glass layer 12P to which fluorine is added can be formed on the outer peripheral surface of the glass rod 20R for an optical fiber preform. Alternatively, preparation may be performed by inserting the glass rod 20R for an optical fiber preform into a through hole of a silica glass tube containing fluorine and then integrating the glass rod. In addition, preparation may be performed by appropriately combining the soot method and the integration method. In this way, there is obtained an optical fiber preform 1P in which the outer peripheral surface of the glass rod 20R for an optical fiber preform is surrounded by the silica glass layer 12P containing fluorine.

### <Drawing Step P7>

This step is a step of drawing the optical fiber preform 1P having the glass rod 20R for an optical fiber preform to obtain an optical fiber. FIG. 10 is a view illustrating this step. In this step, the optical fiber preform 1P is placed in a drawing furnace 110, and the optical fiber preform 1P is heated by a heating unit 111 of the drawing furnace 110. The lower end of the optical fiber preform 1P is brought into a molten state by this heating, and glass is drawn from the optical fiber preform 1P. The drawn molten glass is solidified immediately after coming out of the drawing furnace 110, the glass rod 20R for an optical fiber preform becomes the core 11, and the silica glass layer 12P surrounding the glass rod 20R for an optical fiber preform becomes the cladding 12. In this way, a bare optical fiber is obtained. Thereafter, the bare optical fiber passes through the cooling device 120 and is cooled to an appropriate temperature. The cooled bare optical fiber passes through the coating device 130 to form the inner protective layer 13 and the outer protective layer 14, and becomes the optical fiber 1 illustrated in FIG. 1. The direction of the optical fiber 1 is changed by a turn pulley 141, and the optical fiber 1 is wound by a reel 142. In this way, the optical fiber 1 is produced.

As described above, an apparatus 30 for producing a glass rod for an optical fiber preform of the present embodiment includes: a first lathe grip part 31 capable of gripping a silica glass tube 20 at a position separated by a predetermined distance from the end of one side of the silica glass tube 20; a second lathe grip part 32 capable of gripping the silica glass tube 20 on the other side relative to the first lathe grip part 31; a first heating unit 33 provided to the one side relative to the first lathe grip part 31 and capable of heating the silica glass tube 20 such that an alkali compound 40 disposed in a through hole 20H of the silica glass tube 20 reaches the melting point or higher; a carrier gas introduction part 35 capable of introducing a carrier gas CG into the through hole 20H of the silica glass tube 20 from the one side such that the alkali compound vaporized is allowed to flow and the alkali compound micronized in the course of flowing is allowed to flow through the through hole 20H of the silica glass tube 20 between the first lathe grip part 31 and the second lathe grip part 32; and a second heating unit 34 capable of heating the silica glass tube 20 while moving along the longitudinal direction of the silica glass tube 20 such that fine particles of the alkali compound reach the oxidation reaction temperature or higher.

Further, a method for producing a glass rod for an optical fiber preform of the present embodiment includes: a gripping step P1 of gripping a silica glass tube 20 at a position separated by a predetermined distance from the end of one side of the silica glass tube 20 with a first lathe grip part 31 and gripping the silica glass tube 20 with a second lathe grip part 32 on the other side relative to the first lathe grip part 31; a first heating step P2 of heating the silica glass tube 20 such that an alkali compound 40 disposed in a through hole 20H of the silica glass tube 20 on the one side relative to the first lathe grip part 31 reaches the melting point or higher; a flowing step P3 of introducing a carrier gas CG into the through hole 20H of the silica glass tube 20 from the one side, allowing the alkali compound vaporized in the first heating step P2 to flow, and allowing the alkali compound micronized in the course of flowing to flow through the through hole 20H of the silica glass tube 20 between the first lathe grip part 31 and the second lathe grip part 32; and a second heating step P4 of heating the silica glass tube 20 while moving a second heating unit 34 along the longitudinal direction of the silica glass tube 20 such that fine particles of the alkali compound flowing through the through hole 20H reach the oxidation reaction temperature or higher.

According to the apparatus 30 for producing a glass rod for an optical fiber preform, the method for producing a glass rod for an optical fiber preform can be performed. Further, according to the apparatus 30 and the method for producing a glass rod for an optical fiber preform, even when the length of the silica glass tube 20 to be a glass rod 20R for an optical fiber preform is increased, deflection of the silica glass tube 20 can be suppressed, as compared with an apparatus and a method for producing a glass rod for an optical fiber preform as a glass member in which the alkali compound 40 is disposed between the first lathe grip part 31 and the second lathe grip part 32 and heated. In addition, in the apparatus for producing a glass rod 20R for an optical fiber preform of the present embodiment, the alkali compound forced to flow by the carrier gas CG can be cooled at the portion between the position where the first heating unit 33 heats the silica glass tube 20 and the first lathe grip part 31, at the portion where the first lathe grip part 31 grips the silica glass tube 20, and at the portion between the position closest to the first lathe grip part 31 where the second heating unit 34 heats the silica glass tube 20 and the first lathe grip part 31. Thus, the alkali compound can be appropriately cooled as compared with an apparatus and a method for producing a glass rod for an optical fiber preform in which the alkali compound 40 is disposed between the first lathe grip part 31 and the second lathe grip part 32 and heated, and as compared with an apparatus and a method for producing a glass rod for an optical fiber preform as a glass member in which the alkali compound 40 is disposed between the first lathe grip part 31 and the second lathe grip part 32 and heated. Hence, according to the apparatus 30 and the method for producing a glass rod for an optical fiber preform of the present embodiment, it is possible to produce a glass rod 20R for an optical fiber preform from which a long optical fiber preform 1P can be formed.

Although the present invention has been described by taking the above-described embodiment as an example, the present invention is not limited thereto. For example, in the above embodiment, an alkali compound is heated to a temperature at which the alkali compound reacts with oxygen or higher, whereby the silica glass tube 20 is doped with an alkali metal oxide or an alkaline earth metal oxide. However, the present invention is not limited thereto, and the silica glass tube 20 may be doped with an alkali compound such as an alkali metal compound or an alkaline earth metal compound. In this case, in the second heating step P4, the alkali compound is heated to the melting point or higher by the second heating unit 34, the melted alkali compound is moved while being brought into contact with the silica glass tube 20, whereby the silica glass tube 20 can be doped with the alkali compound. In this case, the carrier gas CG need not contain oxygen, and the carrier gas CG in this case may be, for example, an inert gas such as argon, helium, or nitrogen. The carrier gas CG may be a mixed gas of silicon tetrachloride and oxygen. Thus, the carrier gas introduction part 35 in this case has a configuration capable of introducing the carrier gas into the through hole 20H of the silica glass tube 20 such that the alkali compound vaporized is allowed to flow through the through hole 20H and the alkali compound micronized in the course of flowing deposits on the inner wall of the silica glass tube 20 between the first lathe grip part 31 and the second lathe grip part 32.

In the above embodiment, an example in which the cladding 12 is doped with fluorine has been described, but the cladding 12 need not be doped with fluorine. When the core 11 is doped with a dopant that increases the refractive index, such as germanium, the cladding 12 may be pure silica glass doped with no dopant. In order to lower the refractive index of the cladding 12, the cladding 12 may be doped with boron or the like.

Further, in the above embodiment, the reservoir portion 22 is formed by the pair of reduced diameter portions 21a and 21b, but the reservoir portion 22 need not have the same configuration as in the above embodiment as long as the alkali compound 40 is disposed and heated by the first heating unit 33.

As described above, according to the present invention, there are provided, using a producing method to which an MCVD method is applied, an apparatus for producing a glass rod for an optical fiber preform which can increase the length of the glass rod to be produced for an optical fiber preform, a method for producing a glass rod for an optical fiber preform, and a method for producing an optical fiber, and those can be utilized in optical fiber communication and other fields using optical fibers.

## Claims

1. An apparatus for producing a glass rod for an optical fiber preform, comprising:
a first lathe grip part capable of gripping a silica glass tube at a position separated by a predetermined distance from an end of one side of the silica glass tube;
a second lathe grip part capable of gripping the silica glass tube on other side of the silica glass tube relative to the first lathe grip part;
a first heating unit provided to the one side relative to the first lathe grip part and capable of heating the silica glass tube such that an alkali metal compound or an alkaline earth metal compound disposed in a through hole of the silica glass tube reaches a melting point or higher;
a carrier gas introduction part capable of introducing a carrier gas into the through hole of the silica glass tube from the one side such that the alkali metal compound or the alkaline earth metal compound vaporized is allowed to flow and the alkali metal compound or the alkaline earth metal compound micronized in a course of flowing is allowed to flow through the through hole of the silica glass tube between the first lathe grip part and the second lathe grip part; and
a second heating unit capable of heating the silica glass tube while moving along a longitudinal direction of the silica glass tube such that fine particles of the alkali metal compound or the alkaline earth metal compound reach an oxidation reaction temperature or higher.

2. The apparatus for producing a glass rod for an optical fiber preform according to claim 1, wherein
a distance from a position where the first heating unit heats the silica glass tube to the first lathe grip part is longer than a distance from a position closest to the first lathe grip part where the second heating unit heats the silica glass tube to the first lathe grip part.

3. The apparatus for producing a glass rod for an optical fiber preform according to claim 1 or 2, wherein
the first lathe grip part is made of metal.

4. A method for producing a glass rod for an optical fiber preform, the method comprising:
a gripping step of gripping a silica glass tube at a position separated by a predetermined distance from an end of one side of the silica glass tube with a first lathe grip part and gripping the silica glass tube with a second lathe grip part on other side of the silica glass tube relative to the first lathe grip part;
a first heating step of heating the silica glass tube such that an alkali metal compound or an alkaline earth metal compound disposed in a through hole of the silica glass tube on the one side relative to the first lathe grip part reaches a melting point or higher;
a flowing step of introducing a carrier gas into the through hole of the silica glass tube from the one side, allowing the alkali metal compound or the alkaline earth metal compound vaporized in the first heating step to flow, and allowing the alkali metal compound or the alkaline earth metal compound micronized in a course of flowing to flow through the through hole of the silica glass tube between the first lathe grip part and the second lathe grip part; and
a second heating step of heating the silica glass tube while moving a second heating unit along a longitudinal direction of the silica glass tube such that fine particles of the alkali metal compound or the alkaline earth metal compound reach an oxidation reaction temperature or higher.

5. The method for producing a glass rod for an optical fiber preform according to claim 4, wherein
a distance from a position where the silica glass tube is heated in the first heating step to the first lathe grip part is longer than a distance from a position closest to the first lathe grip part where the silica glass tube is heated in the second heating step to the first lathe grip part.

6. A method for producing an optical fiber, the method comprising:
a drawing step of drawing an optical fiber preform having a glass rod for an optical fiber preform produced by the method for producing a glass rod for an optical fiber preform according to claim 4 or 5.
